# EUROPÄISCHE PATENTSCHRIFT

(11) **EP 2 690 729 B1**
(45) Veröffentlichungstag und Bekanntmachung des Hinweises auf die Patenterteilung: **04.11.2015**
(21) Anmeldenummer: 13178217.9
(22) Anmeldetag: 26.07.2013
(51) Int. Cl.: H02G 3/12, H02G 3/14

(54) **Elektro-Installationssystem und Hohlwanddose zur Elektro-Installation**
Electrical installation system and dry wall box for electric installation
Système d'installation électrique et boîtier pour cloison creuse pour l'installation électrique

(30) Priorität: 26.07.2012 EP 12178085; 26.07.2012 EP 12178087
(43) Veröffentlichungstag der Anmeldung: 29.01.2014
(73) Patentinhaber: GIRA GIERSIEPEN GmbH & Co. KG, 42477 Radevormwald (DE)
(72) Erfinder: Strehle, Ronny, 42499 Hückeswagen (DE); Vole, Andreas, 51688 Wipperfürth (DE); Lankuttis, Klaus, 51465 Bergisch Gladbach (DE); Kalinke, Jens, 42499 Hückeswagen (DE)
(74) Vertreter: Patentanwälte Dr. Solf & Zapf

(56) Entgegenhaltungen:
- EP-A1- 1 376 801
- EP-A1- 1 511 144
- EP-A1- 1 675 236
- DE-A1- 2 355 826
- DE-A1-102005 004 005
- FR-A1- 2 839 818

## Beschreibung

Die vorliegende Erfindung betrifft gemäß dem Oberbegriff des Anspruchs 1 eine Hohlwanddose für die Elektro-Installation, mit einem topfartigen, eine einseitige Öffnung aufweisenden Dosenkörper zum Einsetzen in einen Lochausschnitt einer Montagewand und zur Aufnahme eines Geräteeinsatzes eines Elektro-Installationsgerätes, wie Schalter, Steckdose oder dergleichen, sowie mit einem die Öffnung des Dosenkörpers flanschartig umschließenden Auflagerand zur Anlage an der Montagewand, und mit einer Krallenbefestigung mit krallenartigen, auf der Außenseite des Dosenkörpers geführten und mittels je einer seitlichen Montageschraube zum Hintergreifen der Montagewand betätigbaren Haltelementen, wobei der Dosenkörper an seinem Außenumfang schachtartige Führungen zur Durchführung der Montageschrauben und Führung der Halteelemente aufweist, und wobei der Dosenkörper und der Auflagerand als separate Einzelteile ausgebildet sind, wobei der Auflagerand von einem rahmenförmigen, flachen Tragelement nach Art eines bei Elektro-Installationsgeräten üblichen Tragrings gebildet ist, und wobei das Tragelement und der Dosenkörper gemeinsam mit den Montageschrauben der Krallenbefestigung montierbar sind.

Zudem betrifft die vorliegende Erfindung ein Elektro-Installationssystem, umfassend eine derartige Hohlwanddose zur Montage in einem Lochausschnitt einer Montagewand und ein Geräteeinsatz zum Verbinden mit der Hohlwanddose.

Hohlwanddosen, häufig auch als ISO-Hohlwanddosen bezeichnet, sind hinlänglich und auch in teilweise unterschiedlichen Ausführungsvarianten bekannt. Lediglich beispielhaft seien hier die Veröffentlichungen DE 10 2005 004 005 A1, DE 25 26 890 C2, DE 41 28 042 A1, DE 42 41 390 A1 und DE 202 17 322 U1 genannt.

Zur Geräte-Installation mit solchen bekannten Hohlwanddosen werden zunächst in Hohlwänden passende kreisförmige Lochausschnitte hergestellt. In jeden Lochausschnitt wird dann eine Hohlwanddose eingesetzt und über die Krallenbefestigungen befestigt, wozu die üblicherweise zwei diametral gegenüberliegenden krallenartigen Halteelemente mittels der zugehörigen zwei Montageschrauben von hinten gegen die Montagewand gezogen werden. Dabei stützt sich die Dose über ihren flanschartigen Auflagerand zur Einsetzbegrenzung an der Montagewand ab. Die eigentliche Gerätemontage erfolgt dann in aller Regel über zwei weitere Montageschrauben, die durch Löcher eines geräteseitigen Tragrings in Schraubenlöcher im Randbereich der Dose eingeschraubt werden. Alternativ kann auch eine Gerätemontage über so genannte Spreizkrallen des jeweiligen Geräteeinsatzes erfolgen. In jedem Fall sind aber für die Montage eines Gerätes insgesamt vier Verschraubungen erforderlich. Außerdem kann der Nachteil auftreten, dass der flanschartige Auflagerand der Dose im an den jeweiligen Wand-Lochausschnitt angrenzenden Bereich auf der Oberfläche der Wand zur Auflage kommt. Dies führt dann dazu, dass der Geräte-Tragring nicht flächenbündig auf der Wand montiert werden kann, sondern über einen von der Dicke des Dosen-Auflagerandes bestimmten Abstand von der Wand entfernt ist, was aber eine korrekte Montage von Rahmenteilen des Installationsgerätes beeinträchtigt. Dieser Nachteil kann nur vermieden werden, wenn der Dosen-Auflagerand über eine Loch-Anfasung versenkt wird. Allerdings ist dies nicht in allen Fällen möglich, beispielsweise nicht oder nur sehr eingeschränkt bei metallischen Wandungen.

Aus der EP 1 511 144 A1, der FR 2 839 818 und der DE 23 55 826 A1 sind Hohlwanddosen gemäß dem Oberbegriff des Anspruchs 1 bekannt, bei denen der Dosenkörper und der Auflagerand als separate Einzelteile ausgebildet sind, und der Auflagerand von einem rahmenförmigen, flachen Tragelement nach Art eines bei Elektro-Installationsgeräten üblichen Tragrings gebildet ist, und wobei das Tragelement und der Dosenkörper gemeinsam mit den Montageschrauben der Krallenbefestigung montierbar sind. Diese Hohlwanddosen haben den Nachteil, dass die Montageschrauben senkrecht zur Einbaurichtung in der Montageebene horizontal und/oder vertikal starr gelagert sind, so dass das Tragelement relativ zu dem Dosenkörper in einer Montageebene zur Ausrichtung nur durch in dem Tragring angeordneten Langlöchern relativ zum Dosenkörper verdrehbar gelagert ist. Dies schränkt die Ausrichtungsmöglichkeiten insbesondere zum Ausgleich von Ungenauigkeiten der Lochausschnitte in der Montagewand ein.

Zudem sind aus der EP 1 376 801 A1, der DE 30 01 574 A1 und der EP 1 675 236 A1 Elektro-Installationssysteme bekannt, bei denen der Geräteeinsatz mittels einer Rastverbindung an einem mit der Hohlwanddose über eine Schraubverbindung montierten Tragelement verbunden wird. Eine derartige Rastverbindung hat den Nachteil, dass keine manuelle Ausrichtung des Geräteeinsatzes relativ zum Tragelement möglich ist. Dadurch wird es erschwert, eine genaue waagerechte oder senkrechte Ausrichtung des Tragelementes vornehmen zu können. Insbesondere spielt die Ausrichtbarkeit eine wichtige Rolle, wenn mindestens zwei Dosen neben- oder übereinander für eine Mehrfachgeräte-Kombination montiert sind, und wenn es dabei, d. h. bei der vorhergehenden Herstellung der Lochausschnitte in der Montagewand, zu Abweichungen von der optimalen Soll-Position, z. B. von dem erforderlichen Stichmaß-Mittenabstand, in Deutschland üblicherweise 71 mm, kommen sollte. In solchen Fällen reicht die Ausrichtbarkeit herkömmlicher Hohlwanddosen und Tragelemente nicht aus, um auf möglichst einfache Art eine exakte Montage und Ausrichtung zu ermöglichen.

Der vorliegenden Erfindung liegt die Aufgabe zu Grunde, eine Hohlwanddose und ein Elektro-Installationssystem der eingangs beschriebenen, gattungsgemäßen Art zu schaffen, mit der der Montageaufwand zur Installation von Elektro-Installationsgeräten reduziert und die Montagequalität und Ausrichtbarkeit verbessert wird.

Erfindungsgemäß wird diese Aufgabe durch eine Hohlwanddose mit den Merkmalen des kennzeichnenden Teils des unabhängigen Anspruchs 1 und einem Elektro-Installationssystem gemäß Anspruch 13 gelöst. Vorteilhafte Ausgestaltungsmerkmale der Erfindung sind in den abhängigen Ansprüchen sowie in der anschließenden Beschreibung enthalten.

Erfindungsgemäß ist demnach vorgesehen, dass der Dosenkörper an seinem Boden im Bereich der schachtartigen Führungen jeweils eine angeformte, die schachtartige Führung teilweise abdeckende Haltezunge aufweist, wobei die Haltezungen jeweils im Bereich der entsprechenden schachtartigen Führung ein Durchgangsloch zur Lagerung der Montageschraube aufweisen, wobei die schachtartigen Führungen und/oder die Durchgangslöcher in den Haltezungen derart ausgebildet sind, dass die Montageschrauben senkrecht zur Einbaurichtung in der Montageebene horizontal und/oder vertikal verschiebbar gelagert sind, so dass das Tragelement relativ zu dem Dosenkörper in einer Montageebene zur Ausrichtung verstellbar horizontal und vertikal verschiebbar ist. Eine derartige Ausgestaltung vergrößert das relative Bewegungsspiel der Montageschrauben in den Führungen und in der Lagerung des Dosenkörpers und damit zwischen dem Dosenkörper und dem Tragelement.

Bevorzugt sind das Tragelement und der Dosenkörper gemeinsam mit den Montageschrauben der Krallenbefestigung montierbar, wobei das Tragelement relativ zu dem Dosenkörper in einer Montageebene zur Ausrichtung innerhalb eines bestimmten Relativbewegungsbereiches verstellbar ist. Dazu weist das Tragelement im Bereich jeder Montageschraube einen in den Dosenkörper eingreifenden, parallel beabstandeten Haltesteg auf, wobei das Tragelement und jeder Haltesteg fluchtende Durchführöffnungen für die jeweilige Montageschraube derart aufweisen , dass das Tragelement mittels der Montageschrauben gegenüber dem Dosenkörper um die Achse der Einbaurichtung drehbar gelagert ist. Insbesondere sind die Durchführöffnungen in dem Auflagerand des Tragelementes und dem Haltesteg als Langlöcher ausgebildet.

Dadurch kann vorteilhafterweise das Tragelement in einem noch nicht vollständig fest angezogenen Zustand der Montageschrauben relativ zu dem in dem Wand-Lochausschnitt sitzenden und daher in seiner Position festgelegten Dosenkörper in einer von der Fläche des Tragelementes bzw. von der Wandfläche definierten Montageebene ausgerichtet und anschließend über die Montageschrauben durch festes Anziehen befestigt werden. Dies ist vor allem wichtig, um eine genaue waagerechte oder senkrechte Ausrichtung des Tragelementes vornehmen zu können. Ferner spielt die Ausrichtbarkeit eine wichtige Rolle, wenn mindestens zwei Dosen neben- oder übereinander für eine Mehrfachgeräte-Kombination montiert sind, und wenn es dabei, d. h. bei der vorhergehenden Herstellung der Wand-Lochausschnitte, zu Abweichungen von der optimalen Soll-Position, z. B. von dem erforderlichen Stichmaß-Mittenabstand, in Deutschland üblicherweise 71 mm, kommen sollte. In solchen Fällen können dann die zwei Tragelemente relativ zu den Dosenkörpern und damit auch relativ zueinander so ausgerichtet werden, dass sie optimal aneinander angrenzen.

Erfindungsgemäß wird die Ausrichtbarkeit des Tragelementes durch Verdrehung um die Einbauachse in der Montageebene zusätzlich durch eine horizontale und/oder vertikale Verschiebung des Tragelementes in der Montageebene erweitert.

In einer vorteilhaften Ausgestaltung der Erfindung bildet das Tragelement eine Schnittstelle für eine Rastverbindung mit dem sockelartigen Geräteeinsatz, wobei der jeweilige, ohne einen Tragring ausgebildete Geräteeinsatz lediglich in eine angepasste Aufnahmeöffnung des dosenseitig vormontierten Tragelementes einzusetzen ist, bis er über die Rastverbindung selbsttätig fixiert ist. Erfindungsgemäß ist somit der Geräte-Tragring von dem jeweiligen Geräteeinsatz zu der erfindungsgemäßen Hohlwanddose verlagert. Dadurch wird eine wesentliche Reduzierung des Montageaufwandes erreicht, weil zur Installation eines Gerätes nur noch insgesamt zwei Montageschrauben erforderlich sind, mit denen erfindungsgemäß der Dosenkörper und auch das Tragelement wandseitig vormontiert werden. Die eigentliche Geräte-Installation erfolgt dann "schraubenlos", weil nur noch der ohne Tragring ausgebildete Geräteeinsatz - nach Anschluss von elektrischen Leitungen - in die erfindungsgemäße Hohlwanddose, d. h. in deren dem Dosenkörper zugeordnetes Tragelement, eingesetzt bzw. eingesteckt zu werden braucht, wobei über die Rastverbindung eine schnelle und praktisch automatische Befestigung erfolgt. Durch die zuvor erreichte optimal ausgerichtete bzw. ausrichtbare Montageposition des Tragelementes wird auch automatisch, ohne zusätzliches Ausrichten, eine optimale Position des Gerätes gewährleistet.

Durch diese erfindungsgemäße Ausgestaltung vereinfacht sich die Geräte-Installation erheblich. Das jeweilige, von dem Installationsgerät und dem Geräteeinsatz unabhängige, also separate Tragelement kann - insbesondere zusammen mit der Leitungsinstallation - vormontiert werden, im Falle von Neubauten bereits in einer relativ frühen Bauphase. Das Tragelement kann dazu mit Vorteil als üblicher Tragring ausgebildet sein, dessen Aufnahmeöffnung als Schnittstellenöffnung fungiert. Der Tragring kann somit - unabhängig von dem Gerätesockel - dosenseitig insbesondere über Schrauben vormontiert werden. Alternativ kann das Tragelement auch von einem grundsätzlich beliebigen Gehäuse gebildet sein, indem in mindestens einer Gehäusewandung mindestens eine erfindungsgemäße Schnittstellenöffnung vorgesehen ist. Die eigentliche Geräte-Installation erfolgt dann vorteilhafterweise "schraubenlos", weil nur noch der ohne Tragring ausgebildete Geräteeinsatz - nach Anschluss von elektrischen Leitungen - in die Schnittstellenöffnung des jeweiligen Tragelementes eingesetzt bzw. eingesteckt zu werden braucht, wobei über die Rastelemente eine schnelle und praktisch selbsttätige Befestigung erfolgt. Durch die zuvor bereits gewährleistete, optimal ausgerichtete Montageposition des Trägers bzw. der Schnittstellenöffnung wird auch automatisch, ohne zusätzliches Ausrichten, eine optimale Position des Gerätesockels gewährleistet.

Im Folgenden soll die Erfindung anhand der Zeichnungen und darin dargestellter, bevorzugter Ausführungsbeispiele weitergehend erläutert werden. Es zeigen:
- Fig. 1: eine perspektivische Explosionsdarstellung einer erfindungsgemäßen Hohlwanddose zusammen mit einem vereinfachten Teil eines Geräteeinsatzes,
- Fig. 2: eine gegenüber Fig. 1 etwas vergrößerte Perspektivansicht auf die Rückseite eines erfindungsgemäßen Tragelementes der Hohlwanddose zusammen mit dem Geräteeinsatz-Teil gemäß Fig. 1,
- Fig. 3: eine perspektivische Explosionsdarstellung einer Mehrfach-Anordnung mehrerer, und zwar beispielhaft drei Hohlwanddosen mit einem gemeinsamen, einteiligen Mehrfach-Tragelement,
- Fig. 4: eine Vorderansicht in Pfeilrichtung IV gemäß Fig. 1 auf eine erfindungsgemäße Hohlwanddose im montierten Zustand,
- Fig. 5: eine Schnittansicht in der Ebene V-V gemäß Fig. 4,
- Fig. 6: eine weitere Schnittansicht, jedoch in der Ebene VI-VI gemäß Fig. 4.
- Fig. 7: eine Ausführungsvariante eines Einfach-Tragelementes in einer Perspektivdarstellung analog zu Fig. 1,
- Fig. 8: das Tragelement gemäß Fig. 7 in einer rückseitigen Perspektivansicht analog zu Fig. 2,
- Fig. 9: eine entsprechende Ausführungsvariante des Mehrfach-Tragelementes analog zu Fig. 3,
- Fig. 10: eine perspektivische Explosionsdarstellung einer Ausführungsform eines erfindungsgemäßen Elektro-Installationssystems,
- Fig. 11: eine Vorderansicht in Einbaurichtung auf das erfindungsgemäße Elektro-Installationssystem gemäß Fig. 10,
- Fig. 12: eine Vergrößerung des Bereichs D aus Fig. 11 mit der Montageschraube und dem Haltesteg,
- Fig. 13: eine Schnittansicht in der Ebene A-A gemäß Fig. 11,
- Fig. 14: eine Rückansicht in Pfeilrichtung X gemäß Fig. 13 auf das erfindungsgemäße Elektro-Installationssystem gemäß Fig. 10,
- Fig. 15: eine Vergrößerung des Bereichs E aus Fig. 14 mit dem Durchgangsloch und der Haltezunge,
- Fig. 16: eine Schnittansicht in der Ebene B-B gemäß Fig. 11,
- Fig. 17: eine Vergrößerung des Bereichs C aus Fig. 13 mit der Montageschraube und der schachtartigen Führung,
- Fig. 18: eine weitere Ausführungsform eines erfindungsgemäßen Elektro-Installationssystems mit einem Dreifach-Trägerelement,
- Fig. 19: eine Perspektivansicht des Geräteeinsatzes gemäß Fig. 10 aus einer anderen Blickrichtung,
- Fig. 20: eine vergrößerte Teil-Perspektivansicht des Geräteeinsatzes gemäß Fig. 10 zur Erläuterung der Rastelemente,
- Fig. 21: einen vergrößerten Schnitt durch einen in ein Tragelement eingerasteten Geräteeinsatz gemäß Fig. 10 im Bereich des Rastelementes, und
- Fig. 22: einen der Fig. 21 entsprechenden Schnitt, allerdings in der dazu versetzten Schnittebene im Bereich der Ausnehmung 114.

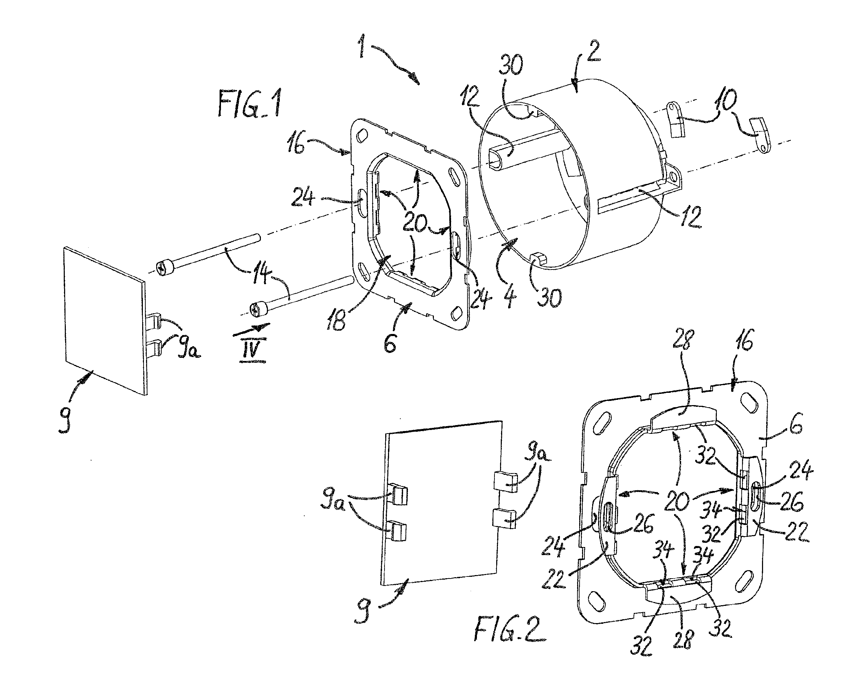

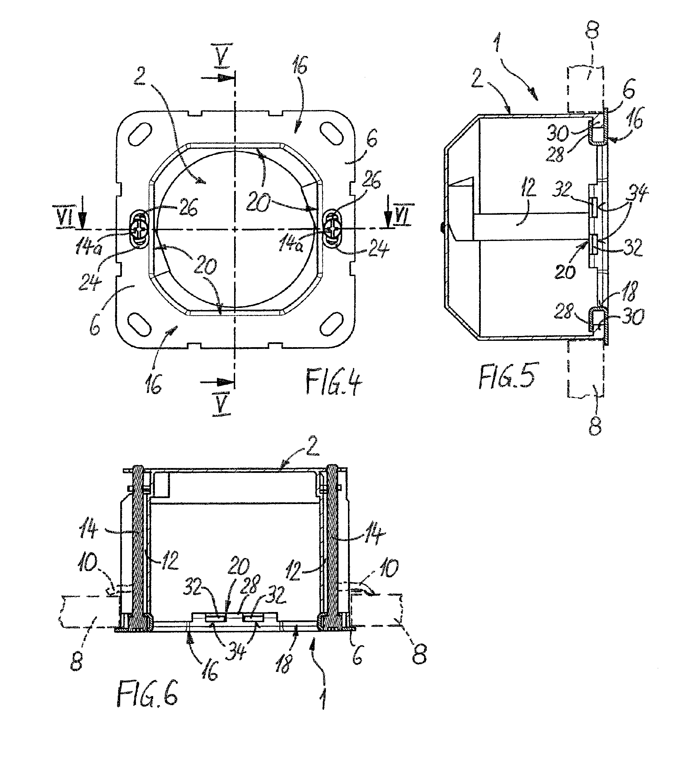

In den verschiedenen Figuren der Zeichnung sind gleiche Teile stets mit den gleichen Bezugszeichen versehen. Wie sich zunächst aus Fig. 1 ergibt, besteht eine erfindungsgemäße Hohlwanddose 1 aus einem topfartigen Dosenkörper 2 mit einer einseitigen Öffnung 4 sowie aus einem die Öffnung 4 des Dosenkörpers 2 flanschartig umschließenden Auflagerand 6. Gemäß Fig. 5 und 6 wird der Dosenkörper 2 in einen Lochausschnitt einer nur gestrichelt angedeuteten Montagewand 8 eingesetzt, wobei der Auflagerand 6 zur einsetzbegrenzenden Anlage an einem an den Lochausschnitt umfangsgemäß angrenzenden Bereich der Montagewand 8 gelangt. Der Dosenkörper 2 dient zur Aufnahme eines nur teilweise vereinfacht und schematisch angedeuteten Geräteeinsatzes 9 eines Elektro-Installationsgerätes, wobei der Geräteeinsatz 9 trotz der vereinfachten, nur wandungsartigen Darstellung auch beispielsweise als Schalter, Steckdose oder dergleichen ausgebildet sein kann. Der Geräteeinsatz 9 weist somit auch einen nicht dargestellten, in den Dosenkörper 2 einzusetzenden Gerätekörper auf.

Zur Befestigung in dem Lochausschnitt der Montagewand 8 weist die Hohlwanddose 1 weiterhin eine Krallenbefestigung mit zwei diametral gegenüberliegenden, krallenartigen Halteelementen 10 auf, die auf der Außenseite des Dosenkörpers 2 in schachtartigen Führungen 12 verschiebbar geführt und mittels jeweils einer seitlichen Montageschraube 14 zum Hintergreifen der Montagewand 8 betätigbar sind. Hierzu wird insbesondere auf Fig. 6 verwiesen.

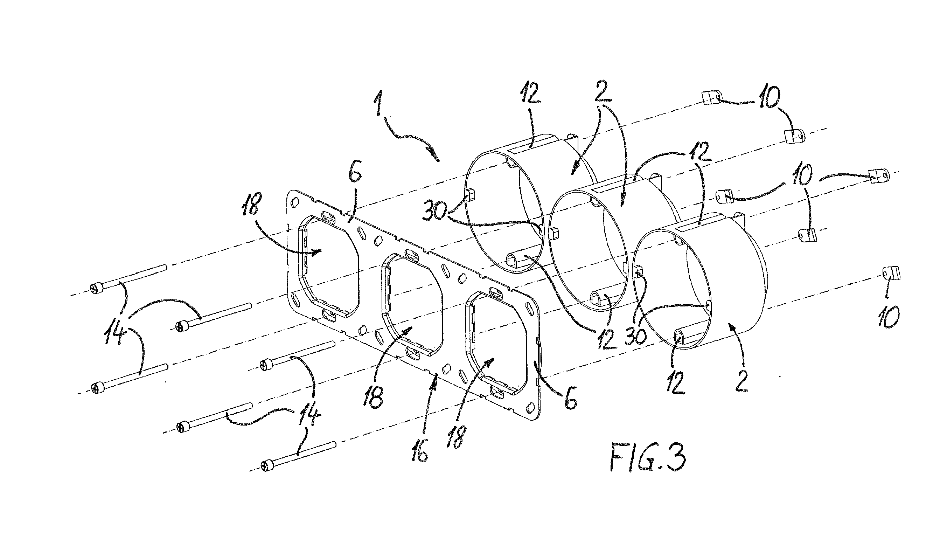

Erfindungsgemäß ist nun vorgesehen, dass der Dosenkörper 2 und der Auflagerand 6 als separate Einzelteile ausgebildet sind. Gemäß Fig. 1 und 3 weist somit der Dosenkörper 2 selbst keinen einstückigen Auflagerand 6 auf. Der Auflagerand 6 ist von einem rahmenförmigen, flachen Tragelement 16 gebildet, wobei dieses Tragelement 16 nach Art eines bei Elektro-Installationsgeräten üblichen so genannten Tragrings ausgebildet ist. Weiterhin sind hierbei das Tragelement 16 und der Dosenkörper 2 gemeinsam mit den nur zwei Montageschrauben 14 der Krallenbefestigung montierbar. Die Verbindung zwischen dem Dosenkörper 2 und dem Tragelement 16 ist derart ausgebildet, dass das Tragelement 16 relativ zu dem Dosenkörper 2 in einer von der vorderen Fläche der Montagewand 8 definierten Montageebene zur Ausrichtung innerhalb eines bestimmten Relativbewegungsbereiches verstellbar ist.

Das Tragelement 16 bildet vorteilhafterweise eine Schnittstelle für eine Rastverbindung mit dem jeweiligen Geräteeinsatz 9. Somit braucht der - ohne einen Tragring bereitgestellte - Geräteeinsatz 9 lediglich in eine innere Aufnahmeöffnung 18 des Tragelementes 16 eingesteckt zu werden, wobei die innere Aufnahmeöffnung 18 randliche, d.h. randseitige Haltekonturen 20 aufweist, die von federelastischen Rastelementen 9a des Geräteeinsatzes 9 insbesondere formschlüssig hintergreifbar sind. Diese Rastverbindung ist bevorzugt aber auch lösbar, indem die Rastelemente 9a mit einem Werkzeug zur Freigabe elastisch verformt werden können.

Hierbei ist es weiterhin vorteilhaft, wenn die Aufnahmeöffnung 18 des Tragelementes 16 bezüglich der Haltekonturen 20 derart ausgebildet ist, dass der Geräteeinsatz 9 in mindestens zwei verschiedenen, um insbesondere 90° in der Montageebene gedrehten Ausrichtungen rastend einsetzbar ist. Bevorzugt ist die Aufnahmeöffnung 18 bezüglich der Haltekonturen 20 quadratisch mit je zwei paarweise parallel gegenüberliegenden Seiten und bevorzugt mit abgerundeten Übergängen zwischen den jeweils benachbarten, zueinander rechtwinkligen Seiten ausgebildet. Über Anlage an den Haltekonturen 20 wird der Geräteeinsatz 9 vorteilhafterweise auch gegen Verdrehung in der Aufnahmeöffnung 18 geführt.

In weiterer bevorzugter Ausgestaltung weist das Tragelement 16 im Bereich jeder Montageschraube 14 einen in den Dosenkörper 2 eingreifenden, parallel beabstandeten Haltesteg 22 auf (siehe insbesondere Fig. 2), wobei das Tragelement 16 und jeder Haltesteg 22 fluchtende Durchführöffnungen 24, 26 für die jeweilige Montageschraube 14 derart aufweisen, dass ein Schraubenkopf 14a der jeweiligen Montageschraube 14 versenkt im Bereich zwischen dem Tragelement 16 und dem Haltesteg 22 angeordnet ist. Die Durchführöffnungen 24, 26 sind bevorzugt als Langlöcher ausgebildet, wobei die jeweilige Durchführöffnung 24 des Tragelementes 16 derart größer als die Durchführöffnung 26 des Haltestegs 22 ausgebildet ist, dass der Schraubenkopf 14a durch die Durchführöffnung 24 des Tragelementes 16 hindurch geführt werden kann, bis er auf dem Haltesteg 22 aufliegt. Wie sich insbesondere aus Fig. 6 ergibt, liegen im montierten Zustand die Haltestege 22 auf Stirnflächen der schachtartigen Führungen auf, so dass sie beim Anziehen der Montageschrauben 14 abgestützt werden. Die als Langlöcher ausgebildeten Durchführöffnungen 24, 26 gestatten ein relatives Ausrichten des Tragelementes 16 relativ zum Dosenkörper 2.

Wie sich weiterhin am besten aus Fig. 2 und 5 ergibt, ist das Tragelement 16 bevorzugt mit dem Dosenkörper 2 zusätzlich nach Art einer Bajonettverbindung verbunden. Dazu weist das Tragelement 16 gemäß Fig. 2 in zwei diametral gegenüberliegenden Bereichen jeweils einen in den Dosenkörper 2 eingreifenden, parallel beabstandeten Haltesteg 28 auf, wobei das Tragelement 16 mit diesen Haltestegen 28 in einer relativen Drehstellung des Dosenkörpers 2 in diesen einsetzbar ist und nach einem relativen Verdrehen in eine Montageposition die Haltestege 28 jeweils einen Halteansatz 30 innerhalb des Dosenkörpers 2 hintergreifen. Zu den Halteansätzen 30 wird besonders auch auf Fig. 1 und 3 verwiesen.

Jeder Haltesteg 22 und 28 ist über einen Übergangsabschnitt am Rand der inneren Aufnahmeöffnung 18 mit dem Tragelement 16 einstückig verbunden und erstreckt sich von dem Übergangsabschnitt und der Aufnahmeöffnung 18 weg nach außen. Auch hierzu wird insbesondere auf die rückseitige Ansicht in Fig. 2 verwiesen. Zur Bildung der Haltekonturen 20 für die Rastelemente 9a des Geräteeinsatzes 9 weist jeder Übergangsabschnitt mindestens eine durch eine Ausnehmung 32 gebildete Haltekante 34 auf. In der dargestellten, bevorzugten Ausführung sind im Bereich jedes Haltestegs 22, 28 zwei Ausnehmungen 32 mit Haltekanten 34 benachbart nebeneinander angeordnet. Gemäß Fig. 1 und 2 weist deshalb der Geräteeinsatz 9 auf jeder von zwei diametral gegenüberliegenden Seiten ebenfalls zwei Rastelemente 9a auf, die mit den jeweils zwei Haltekanten 34 rastend zusammenwirken.

Was noch das Ausführungsbeispiel gemäß Fig. 3 betrifft, so ist hierbei das Tragelement 16 als Mehrfachrahmen für eine Verbindung mit mehreren, wie dargestellt beispielsweise drei Dosenkörpern 2 ausgebildet. Es ist aber auch eine Ausbildung als Zweifach- bis zu Fünffach-Rahmen möglich. Der Mehrfachrahmen hat für jeden Dosenkörper 2 eine gleichartige innere Aufnahmeöffnung 18. Dabei befinden sich die Mittelpunkte der Aufnahmeöffnungen 18 auf einer gemeinsamen horizontal oder vertikal verlaufenden Verbindungslinie. Im Übrigen entspricht die Ausgestaltung des Mehrfachrahmens in seinem jedem Dosenkörper 2 zugeordneten Bereich dem Einfach-Tragelement 16 gemäß Fig. 1 und 2, insbesondere bezüglich der Haltestege 22 und Durchführöffnungen 24, 26. Dies bedeutet, dass im Grunde nur mehrere Tragelemente 16 nebeneinander einstückig verbunden sind.

Das Tragelement 16 und gegebenenfalls das Mehrfach-Tragelement 16 gemäß Fig. 3 besteht als einstückiges Formteil aus Kunststoff oder Metall. So kann es sich mit Vorteil um ein Kunststoff-Spritzgussteil oder alternativ um ein Metallblech-Formteil handeln.

Es sei noch bemerkt, dass das Einfach- oder Mehrfach-Tragelement 16 beliebige Außenrand-Konturen und auch beliebige Innenrand-Konturen der Aufnahmeöffnung 18 aufweisen kann.

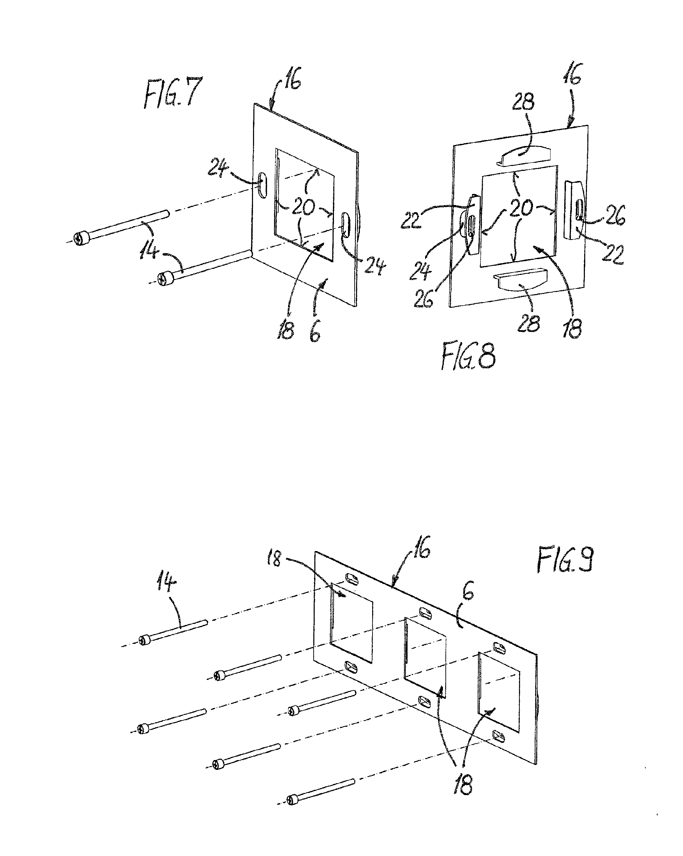

So sind in den Figuren 7 bis 9 beispielhaft Ausführungsvarianten veranschaulicht, wobei das Tragelement 16 eine quadratische oder rechteckige Außenkontur mit rechtwinkligen Außenecken aufweist, und die/jede Aufnahmeöffnung 18 ist bevorzugt quadratisch mit rechtwinkligen Innenecken ausgebildet. Die Haltekonturen 20 sind dabei von geraden Öffnungsrändern gebildet.

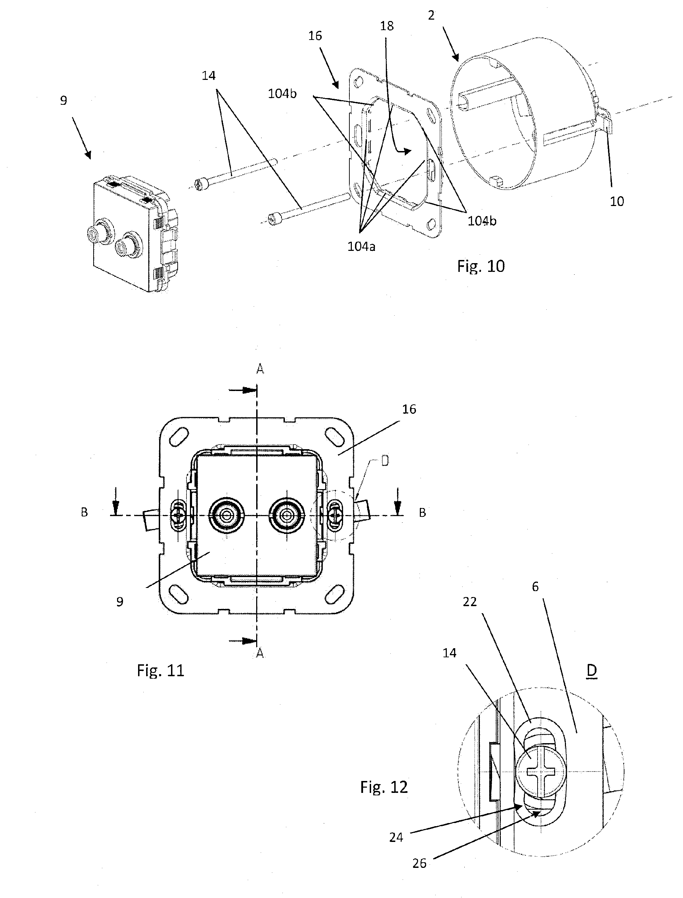

Fig. 10 bis 17 stellen eine erfindungsgemäße Ausführungsform eines Elektro-Installationssystems dar. Die dargestellte Ausführungsform umfasst einen insbesondere als einen TV-Anschluss-Einsatz ausgebildeten Geräteeinsatz 9 und eine oben beschriebene in den Fig. 1, 2, 4, 5, 6, 7 und 8 gezeigte erfindungsgemäße Hohlwanddose 1. Die Hohlwanddose 1 umfasst den Dosenkörper 2, das Tragelement 16, zwei Montageschrauben 14 und zwei krallenartige Halteelemente 10.

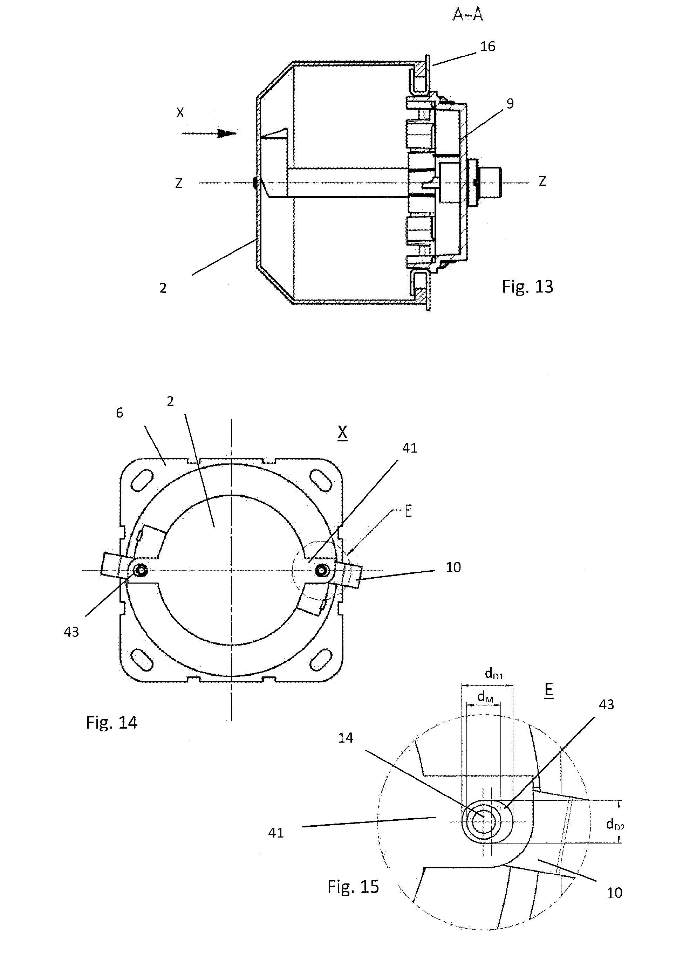

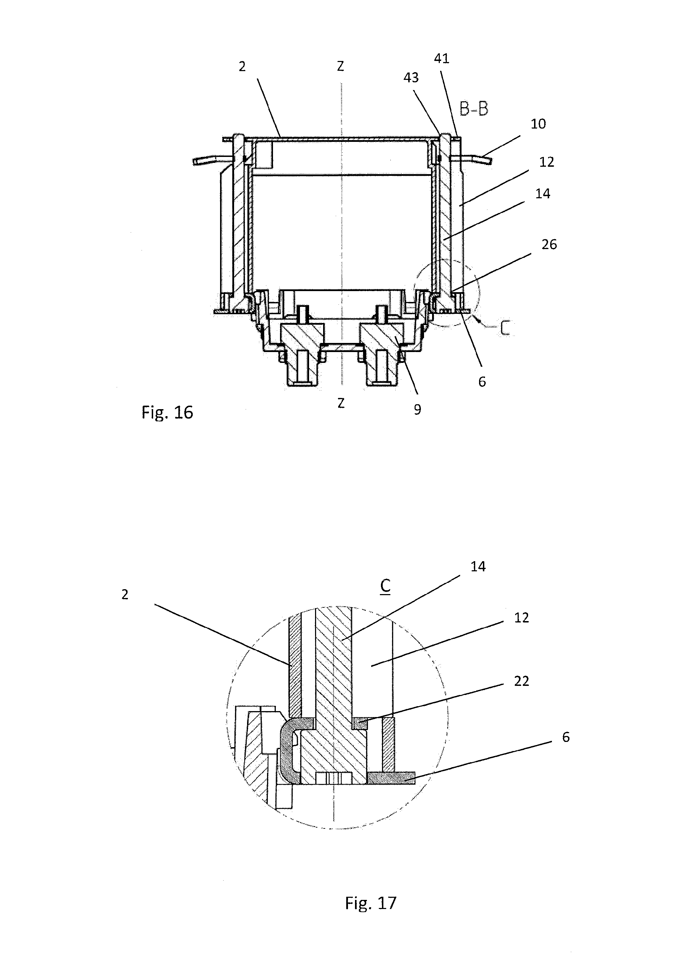

In Fig. 12 ist die in den Durchführöffnungen 24, 26 des Auflagerandes 6 und des Haltesteges 22 eingesteckte Montageschraube 14 vergrößert dargestellt. Die Durchführöffnungen 24, 26 sind insbesondere als bogenförmig um die Mittelachse Z-Z (siehe Fig. 13 und Fig. 16) gekrümmte Langlöcher ausgebildet, so dass das Tragelement in der Montageebene verdreht gegenüber dem Dosenkörper 2 ausgerichtet werden kann.

Wie insbesondere in Fig. 14 und Fig. 15 dargestellt, weist der Dosenkörper 2 der Hohlwanddose 1 an seinem Boden im Bereich der schachtartigen Führungen 12 jeweils eine angeformte, die schachtartige Führung 12 teilweise abdeckende Haltezunge 41 auf. Die Haltezungen 41 weisen jeweils im Bereich der entsprechenden schachtartigen Führung 12 ein Durchgangsloch 43 auf.

Wie insbesondere in Fig. 16 dargestellt, verlaufen die Montageschrauben 14 durch die Durchgangslöcher 26 der Haltestege 22 und durch die schachtartigen Führungen 12 bis in die Durchgangslöcher 43 und sind in den Durchgangslöchern 43 der Haltezungen 41 mit Ihrem Ende gelagert.

Wie in Fig. 15 und Fig. 17 insbesondere ersichtlich, sind gemäß der Erfindung die schachtartigen Führungen 12 und/oder die Durchgangslöcher 43 in den Haltezungen 41 derart ausgebildet, dass die Montageschrauben 14 senkrecht zur Einbaurichtung horizontal und/oder vertikal in der Montageebene verschiebbar gelagert sind. Insbesondere ist der Innendurchmesser der schachtartigen Führungen 12 und der Innendurchmesser d_{D1}, d_{D2} der Durchgangslöcher 43 der Haltezungen 41 größer als der Außendurchmesser d_{M} der Montageschrauben 14. Dies ermöglicht eine besonders flexible Ausrichtung des Tragelementes 16 und des darin eingerasteten Geräteeinsatzes 9 relativ zum Dosenkörper 2, so dass zusätzlich zu dem bereits oben beschriebenen Ausgleich durch Verdrehung in der Montageebene mittels der Durchführöffnungen 24, 26 des Auflagerandes 6 und des Haltesteges 22 auch ein Ausgleich durch horizontales und/oder vertikales Verschieben des Tragelementes 16 gegenüber dem Dosenkörper 2 in der Montageebene ermöglicht wird.

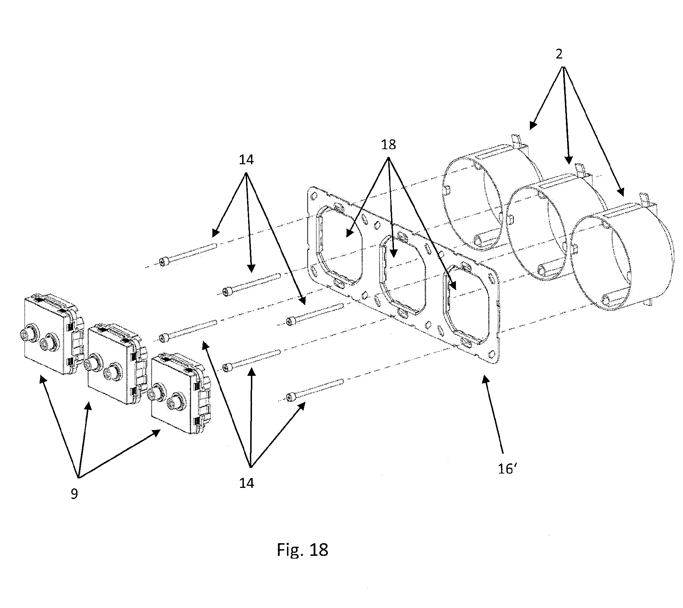

In Fig. 18 ist eine weitere Ausführungsform eines erfindungsgemäßen Elektro-Installationssystems dargestellt. Das Elektro-Installationssystems umfasst insbesondere ein Dreifach-Tragelement 16', welches drei Aufnahmeöffnungen 18 aufweist, insbesondere drei Dosenkörper 2 und insbesondere drei Geräteeinsätze 9, wobei jeder Dosenkörper mittels zwei Montageschrauben 14 an dem Tragelement 16' im montierten Zustand befestigt ist.

Die Erfindung umfasst weitere Ausführungsformen mit einer beliebigen Anzahl von Geräteeinsätzen 9 und Dosenkörpern 2, wobei das Tragelement 16 eine entsprechende Anzahl von Aufnahmeöffnungen 18 aufweist.

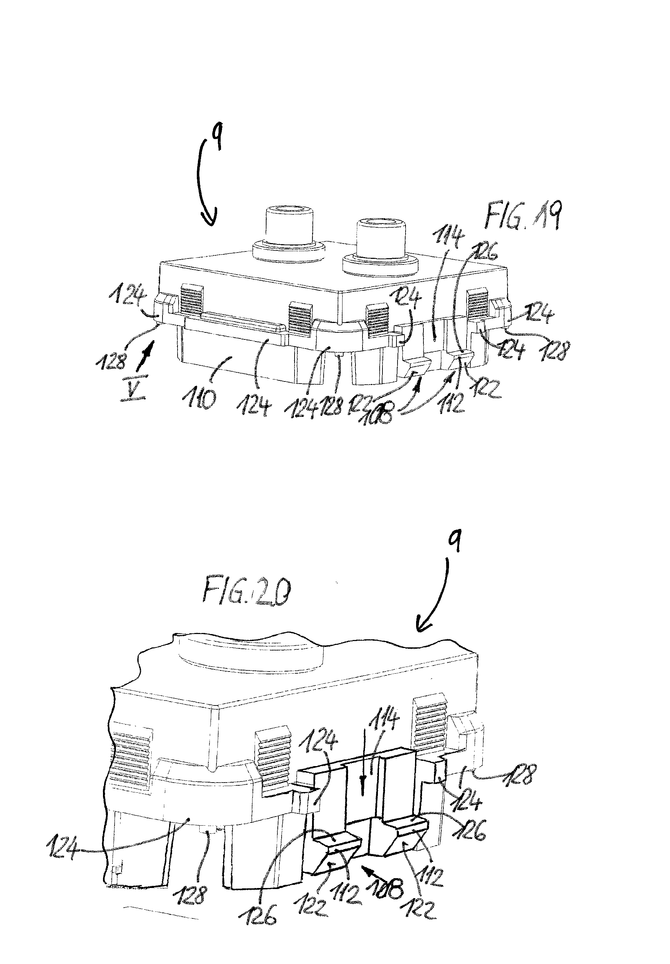

In den Fig. 19 bis 22 ist eine Ausführungsform eines erfindungsgemäßen Geräteeinsatzes 9 beschrieben. Der tragringfreie Geräteeinsatz 9 ist zum rastenden Einstecken in eine Aufnahmeöffnung 18 eines gesonderten Tragelementes 16 gemäß den Fig. 1 bis 18 ausgebildet. Die Aufnahmeöffnung 18 weist gemäß Fig. 10 mindestens zwei geradlinige, parallel zueinander diametral gegenüberliegende Öffnungsränder 104a auf. Bevorzugt ist aber vorgesehen, dass die Aufnahmeöffnung 18 zweimal zwei paarweise parallel gegenüberliegende, geradlinige und gemeinsam eine rechteckige, insbesondere quadratische Öffnungskontur bildende Öffnungsränder 104a aufweist. Die Öffnungsränder 104a bilden die Haltekonturen 20. In einer weiteren Ausführungsform gehen die jeweils direkt benachbarten geradlinigen und zueinander rechtwinkligen Öffnungsränder 104a in den Eckbereichen bevorzugt über abgerundete Öffnungsränder 104b ineinander über. Dadurch ergibt sich bevorzugt eine Öffnungskontur eines Quadrates mit abgerundeten Ecken.

Wie in Fig. 19 ersichtlich, weist der tragringfreie Geräteeinsatz 9 zur Halterung in der Aufnahmeöffnung 18 des Tragelementes 16 in zwei diametral gegenüberliegenden Seitenbereichen Rastelemente 108 zum rastenden Hintergreifen der jeweiligen, ebenfalls diametral gegenüberliegenden Öffnungsränder 104a oder 104b der Aufnahmeöffnung 18 im eingesteckten Zustand auf.

Durch diese vorteilhafte Ausgestaltung braucht der Geräteeinsatz 9 zur Montage lediglich in die Aufnahmeöffnung 18 eingesteckt zu werden, wobei eine selbsttätige rastende Halterung über die Rastelemente 108 erfolgt.

Durch die beschriebene, bevorzugte Ausgestaltung ist der Geräteeinsatz 9 vorteilhafterweise in verschiedenen, um jeweils 90° in der Öffnungsebene gedrehten Ausrichtungen rastend in die Aufnahmeöffnung 18 einsteckbar, und in der eingesetzten jeweiligen Montagelage ist dann der Geräteeinsatz 9 - insbesondere mit einem geringen Seitenspiel zwecks Feinausrichtung der Position und/oder Dreh-Orientierung - gegen Verdrehen in der Aufnahmeöffnung 18 gesichert. Dazu ist es vorteilhaft, wenn der Geräteeinsatz 9 in zwischen den gegenüberliegenden Rastelementen 108 liegenden Seitenbereichen Anlageabschnitte 110 (siehe insbesondere Fig. 19) zur Anlage an den jeweiligen geraden Öffnungsrändern 104a der Aufnahmeöffnung 18 aufweist.

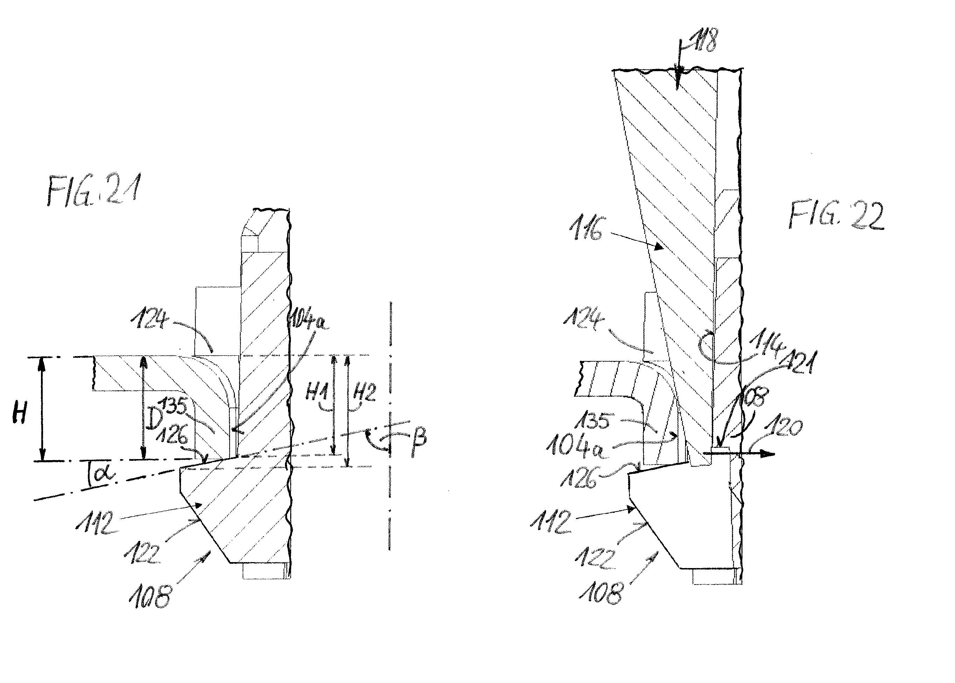

Wie sich weiterhin aus Fig. 19, 20 und 21 ergibt, ist jedes Rastelement 108 des Geräteeinsatzes 9 als federelastischer und dadurch in seitlicher Richtung elastisch biegsamer Rastarm ausgebildet, der sich in Einsteckrichtung erstreckt und endseitig mindestens einen seitlich nach außen vorspringenden Rastansatz 112 zum formschlüssigen oder kraftformschlüssigen Hintergreifen bzw. Untergreifen des jeweiligen Öffnungsrandes 104a der Aufnahmeöffnung 18 aufweist. In der dargestellten, bevorzugten Ausführung ist jedes Rastelement 108 durch eine mittige, durchgehend in Längsrichtung über das Rastelement 108 verlaufende Ausnehmung 114 in zwei jeweils einen Rastansatz 112 aufweisende Rastarmabschnitte unterteilt, wobei die Ausnehmung 114 zur Aufnahme eines von außen einzuführenden Lösewerkzeuges 116 zum Lösen der Verrastung dient. Hierzu wird auf die Darstellung in Fig. 22 verwiesen, wonach als Lösewerkzeug 116 eine Schraubendreherklinge in Einsteckrichtung des Geräteeinsatzes 9, siehe in Fig. 22 den Pfeil 118, in die Ausnehmung 114 zwischen die Rastansätze 112 eingeführt ist, um dann zum Lösen der Verrastung das Rastelement 108 zusammen mit den Rastansätzen 112 in Pfeilrichtung 120 von dem Öffnungsrand 104a weg nach innen zu drücken, bis die Rastansätze 112 den Öffnungsrand 104a freigeben und zur Entnahme des Geräteeinsatzes 9 aus der Aufnahmeöffnung 18 bewegt werden können. Mit Vorteil kann im unteren, den Rastansätzen 112 zugewandten Bereich der Ausnehmung 114 eine in Fig. 21 erkennbare Stufe 121 gebildet sein, die mit dem Ende des Lösewerkzeuges 116 untergriffen werden kann, um den Geräteeinsatz 9 nach dem Lösen der Verrastung aus der Aufnahmeöffnung 18 des Tragelementes 16 herauszuhebeln.

Zum rastenden Einsetzen des Geräteeinsatzes 9 in die Aufnahmeöffnung 18 ist es vorteilhaft, wenn die Rastansätze 112 Einführschrägflächen 122 derart aufweisen, dass beim Einsetzen über die zur Anlage an den Öffnungsrändern 104a gelangenden Einführschrägflächen 122 die Rastelemente 108 selbsttätig elastisch nach innen verformt werden, bis sie dann elastisch zurückschnappen und mit den Rastansätzen 112 die Öffnungsränder 104a hintergreifen.

Um in der eingesetzten Montagelage des Geräteeinsatzes 9 in Einsetzrichtung einen spielfreien Sitz zu erreichen, ist mit Vorteil vorgesehen, dass der Geräteeinsatz 9 Auflageabschnitte 124 zur Auflage auf einer Vorderseite des Tragelementes 16 in der Aufnahmeöffnung 18 benachbarten Bereichen aufweist. Hierbei sind die Auflageabschnitte 124 und die Rastansätze 112 der Rastelemente 108 bezüglich ihres in Einsetzrichtung gemessenen lichten Abstandes derart für eine an die Dicke D - siehe insbesondere Fig. 21 - der Öffnungsränder 104a der Aufnahmeöffnung 18 angepasste Rasthöhe H ausgelegt (siehe dazu Fig. 21), dass der Geräteeinsatz 9 in der eingesetzten Montagelage in Einsetzrichtung spielfrei gehalten wird. Im Zusammenhang damit ist gemäß Fig. 21 und 22 bevorzugt vorgesehen, dass die Rastansätze 112 der Rastelemente 108 nach außen vorspringende Rastflächen 126 aufweisen, die gemäß Fig. 21 in einem spitzen Winkel α schräg zur Öffnungsebene nach außen abfallen, so dass sich für die Verrastung ein so genannter Hinterschneidungswinkel β zur Fügeachse ergibt, der kleiner als 90° ist und insbesondere im Bereich von 75° bis 85° liegt. Durch diese vorteilhafte Ausgestaltung ist die Verrastung für einen Rasthöhen-Bereich von H1 bis H2 ausgelegt, so dass hinsichtlich der Dicke D der Öffnungsränder 104a ein Toleranzausgleich erreicht wird. Durch den Hinterschneidungswinkel β < 90° wird eine leicht kraftformschlüssige Verrastung erreicht. Grundsätzlich wäre es allerdings auch möglich, wenn für eine formschlüssige Verrastung β ≥ 90° ist.

Abschließend sei bemerkt, dass die Rastelemente 108 grundsätzlich auch in den Eckbereichen des Geräteeinsatzes 9 zum Hintergreifen der abgerundeten Öffnungsränder 104b der Aufnahmeöffnung 18 angeordnet sein können. Zudem kann abweichend von den dargestellten Ausführungsbeispielen der Geräteeinsatz 9 als beliebiges Installationsgerät ausgebildet sein, beispielsweise auch als Steckdose, Schalter, Taster oder dergleichen, aber auch als beliebiges Sondergerät, wie ein Modul einer Hauskommunikationsanlage, ein Gerät eines Installations-Bus-Systems oder dergleichen.

Das erfindungsgemäße Elektro-Installationssystem ermöglicht vorteilhafterweise eine sehr universelle Installation, indem praktisch als "universelle Schnittstelle" beliebige Schnittstellen-Tragelemente 16 vorgesehen sein können. So kann es sich um Tragringe in unterschiedlichen Größen handeln, beispielsweise für das in Deutschland übliche Stichmaß 71 mm oder für das speziell gemäß British Standard vorgesehene Maß 80 mm oder aber für andere internationale Standards. Weiterhin können als Träger Aufputz-Gehäuse, Tischgehäuse, Kabelkanäle, Bodentanks, Tischtanks und/oder dergleichen genutzt werden.

## Patentansprüche

1. Hohlwanddose (1) für die Elektro-Installation, mit einem topfartigen, eine einseitige Öffnung (4) aufweisenden Dosenkörper (2) zum Einsetzen in einen Lochausschnitt einer Montagewand (8) und zur Aufnahme eines Geräteeinsatzes (9) sowie mit einem die Öffnung (4) des Dosenkörpers (2) flanschartig umschließenden Auflagerand (6) zur Anlage an der Montagewand (8), und mit einer Krallenbefestigung mit krallenartigen, auf der Außenseite des Dosenkörpers (2) geführten und mittels je einer Montageschraube (14) betätigbaren Haltelementen (10), wobei der Dosenkörper (2) an seinem Außenumfang schachtartige Führungen (12) zur Durchführung der Montageschrauben (14) und Führung der Halteelemente (10) aufweist, wobei der Dosenkörper (2) und der Auflagerand (6) als separate Einzelteile ausgebildet sind, wobei der Auflagerand (6) von einem rahmenförmigen, flachen Tragelement (16) nach Art eines bei Elektro-Installationsgeräten üblichen Tragrings gebildet ist, und wobei das Tragelement (16) und der Dosenkörper (2) gemeinsam mit den Montageschrauben (14) der Krallenbefestigung montierbar sind,
**dadurch gekennzeichnet, dass**
der Dosenkörper (2) an seinem Boden im Bereich der schachtartigen Führungen (12) jeweils eine angeformte, die schachtartige Führung (12) teilweise abdeckende Haltezunge (41) aufweist, wobei die Haltezungen (41) jeweils im Bereich der entsprechenden schachtartigen Führung (12) ein Durchgangsloch (43) zur Lagerung der Montageschraube (14) aufweisen, wobei die schachtartigen Führungen (12) und/oder die Durchgangslöcher (43) in den Haltezungen (41) derart ausgebildet sind, dass die Montageschrauben (14) senkrecht zur Einbaurichtung in der Montageebene horizontal und/oder vertikal verschiebbar gelagert sind, so dass das Tragelement (16) relativ zu dem Dosenkörper (2) in einer Montageebene zur Ausrichtung verstellbar horizontal und vertikal verschiebbar ist.

2. Hohlwanddose nach Anspruch 1,
**dadurch gekennzeichnet, dass** das Tragelement (16) eine Schnittstelle für eine Rastverbindung bildet.

3. Hohlwanddose nach Anspruch 1 oder 2,
**dadurch gekennzeichnet, dass** die Schnittstelle des Tragelementes (16) durch eine innere Aufnahmeöffnung (18) mit randseitigen Haltekonturen (20) gebildet wird.

4. Hohlwanddose nach Anspruch 3,
**dadurch gekennzeichnet, dass** die Aufnahmeöffnung (18) des Tragelementes (16) bezüglich der Haltekonturen (20) quadratisch mit je zwei paarweise parallel gegenüberliegenden Seiten und bevorzugt mit abgerundeten Übergängen zwischen den jeweils benachbarten, zueinander rechtwinkligen Seiten ausgebildet ist, so dass die Haltekonturen (20) zwei verschiedene, um insbesondere 90° in der Montageebene gedrehte Rastmontagestellungen bereitstellen.

5. Hohlwanddose nach einem der Ansprüche 1 bis 4,
**dadurch gekennzeichnet, dass** das Tragelement (16) im Bereich jeder Montageschraube (14) einen in den Dosenkörper (2) eingreifenden, parallel beabstandeten Haltesteg (22) aufweist, wobei das Tragelement (16) und jeder Haltesteg (22) fluchtende Durchführöffnungen (24, 26) für die jeweilige Montageschraube (14) derart aufweisen, dass ein Schraubenkopf (14a) der Montageschraube (14) versenkt im Bereich zwischen dem Tragelement (16) und dem Haltesteg (22) angeordnet ist.

6. Hohlwanddose nach einem der Ansprüche 1 bis 5,
**dadurch gekennzeichnet, dass** das Tragelement (16) mit dem Dosenkörper (2) zusätzlich nach Art einer Bajonettverbindung verbunden ist.

7. Hohlwanddose nach Anspruch 6,
**dadurch gekennzeichnet, dass** das Tragelement (16) in zwei diametral gegenüberliegenden Bereichen jeweils einen in den Dosenkörper (2) eingreifenden, parallel beabstandeten Haltesteg (28) aufweist, wobei die Haltestege (28) in einer relativen Drehstellung des Dosenkörpers (2) in diesen einsetzbar sind und nach einem relativen Verdrehen in eine Montageposition jeweils einen Halteansatz (30) innerhalb des Dosenkörpers (2) hintergreifen.

8. Hohlwanddose nach einem der Ansprüche 5 bis 7,
**dadurch gekennzeichnet, dass** jeder Haltesteg (22 und 28) über einen Übergangsabschnitt am Rand der inneren Aufnahmeöffnung (18) mit dem Tragelement (16) verbunden ist und sich von dem Übergangsabschnitt und von der Aufnahmeöffnung (18) weg nach außen erstreckt.

9. Hohlwanddose nach Anspruch 8,
**dadurch gekennzeichnet, dass** jeder Übergangsabschnitt zur Bildung der Haltekonturen (20) für die Rastelemente (9a) des Geräteeinsatzes (9) mindestens eine durch eine Ausnehmung (32) gebildete Haltekante (34) aufweist.

10. Hohlwanddose nach einem der Ansprüche 1 bis 9,
**dadurch gekennzeichnet, dass** das Tragelement (16) als Mehrfachrahmen mit mindestens zwei gleich ausgebildeten Aufnahmeöffnungen (18) für eine Verbindung mit mindestens zwei Dosenkörpern (2) ausgebildet ist.

11. Hohlwanddose nach einem der Ansprüche 1 bis 10,
**dadurch gekennzeichnet, dass** das Tragelement (16) als einstückiges Formteil aus Kunststoff oder Metall besteht.

12. Hohlwanddose nach einem der Ansprüche 5 bis 11,
**dadurch gekennzeichnet, dass** die Durchführöffnungen (24, 26) in dem Auflagerand (6) des Tragelementes (16) und dem Haltesteg (22) als Langlöcher ausgebildet sind.

13. Elektro-Installationssystem, umfassend eine Hohlwanddose mit den Merkmalen eines der Ansprüche 1 bis 12, und einer der Aufnahmeöffnungen (18) des Tragelementes (16) entsprechenden Anzahl von mit dem Tragelement (16) über eine Rastverbindung verbundenen Geräteeinsätzen (9).

14. Elektro-Installationssystem nach Anspruch 13,
**dadurch gekennzeichnet, dass** der Geräteeinsatz (9) in Anpassung an die Aufnahmeöffnung (18) in zwei diametral gegenüberliegenden Seitenbereichen oder in mindestens zwei diametral gegenüberliegenden Eckenbereichen Rastelemente (108) zum rastenden Hintergreifen von Öffnungsrändern (104a, 104b) der Aufnahmeöffnung (18) aufweist.

15. Elektro-Installationssystem nach Anspruch 13,
**dadurch gekennzeichnet, dass** der Geräteeinsatz (9) in Anpassung an die Aufnahmeöffnung (18) derart ausgebildet ist, dass er in mindestens zwei verschiedenen, um insbesondere 90° in der Öffnungsebene gedrehten Ausrichtungen rastend in die Aufnahmeöffnung (18) einsteckbar und in der eingesetzten jeweiligen Montagelage - insbesondere mit einem geringen Seitenspiel - gegen Verdrehen in der Aufnahmeöffnung (18) gesichert ist.

16. Elektro-Installationssystem nach Anspruch 13,
**dadurch gekennzeichnet, dass** der Geräteeinsatz (9) in Anpassung an die - zweimal zwei paarweise parallel gegenüberliegende, geradlinige und gemeinsam eine rechteckige, insbesondere quadratische Öffnungskontur bildende Öffnungsränder (1 04a) aufweisende - Aufnahmeöffnung (18) in zwischen den gegenüberliegenden Rastelementen (108) liegenden Seitenbereichen Anlageabschnitte (110) zur Anlage an den jeweiligen geraden Öffnungsrändern (104a) der Aufnahmeöffnung (18) aufweist.

17. Elektro-Installationssystem nach einem der Ansprüche 14 bis 16,
**dadurch gekennzeichnet, dass** jedes Rastelement (108) des Geräteeinsatzes (9) als federelastischer Rastarm ausgebildet ist, der sich in Einsteckrichtung erstreckt und endseitig mindestens einen seitlich nach außen vorspringenden Rastansatz (112) zum Hintergreifen des jeweiligen Öffnungsrandes (104a, 104b) der Aufnahmeöffnung (18) aufweist.

18. Elektro-Installationssystem nach Anspruch 16,
**dadurch gekennzeichnet, dass** jedes Rastelement (108) durch eine mittige Ausnehmung (14) in zwei jeweils einen Rastansatz (12) aufweisende Rastarmabschnitte unterteilt ist, wobei die Ausnehmung (14) zur Aufnahme eines von außen einzuführenden Lösewerkzeuges (16) zum Lösen der Verrastung dient.

19. Elektro-Installationssystem nach einem der Ansprüche 14 bis 18,
**dadurch gekennzeichnet, dass** der Geräteeinsatz (9) Auflageabschnitte (124) zur Auflage auf dem Tragelement (16) in der eingesetzten Montagelage aufweist, wobei die Auflageabschnitte (124) und die Rastelemente (108) derart für eine an die Dicke (D) der Öffnungsränder (1 04a) der Aufnahmeöffnung (18) angepasste Rasthöhe (H; H1, H2) ausgelegt sind, dass der Geräteeinsatz (9) in der eingesetzten Montagelage in Einsetzrichtung spielfrei gehalten wird.

20. Elektro-Installationssystem nach einem der Ansprüche 15 bis 19,
**dadurch gekennzeichnet, dass** die Rastansätze (112) der Rastelemente (108) nach außen vorspringende Rastflächen (126) mit einem Hinterschneidungswinkel (β) aufweisen, der vorzugsweise kleiner als 90° ist und insbesondere im Bereich von 75° bis 85° liegt.

## Claims

1. Cavity-wall socket (1) for an electrical installation, having a cup-shaped socket body (2), which has a unilateral opening (4), for inserting into a cutout hole of an assembly wall (8) and for receiving an apparatus insert (9), and having a bearing periphery (6), which encloses the opening (4) of the socket body (2) in a flange-like manner, for bearing on the assembly wall (8), and having a claw-type fastening having claw-like retaining elements (10) which are guided on the outer side of the socket body (2) and are activatable in each case by one assembly screw (14), wherein the socket body (2) on the external circumference thereof has duct-like guides (12) for passing through the assembly screws (14) and for guiding the retaining elements (10), wherein the socket body (2) and the bearing periphery (6) are configured as separate individual parts, wherein the bearing periphery (6) as is usual in the case of electrical installation apparatus is formed in the fashion of a support ring by a frame-shaped flat support element (16), and wherein the support element (16) and the socket body (2) by way of the assembly screws (14) of the claw-type fastening are capable of collective assembly,
**characterized in that**
the socket body (2) on the base thereof, in the region of the duct-like guides (12), has in each case one moulded retaining lug (41) which partially covers the duct-like guide (12), wherein the retaining lugs (41) in the region of the corresponding duct-like guide (12) have in each case one through hole (43) for mounting the assembly screw (14), wherein the duct-like guides (12) and/or the through holes (43) are configured in the retaining lugs (41) in such a manner that the assembly screws (14) are mounted so as to be horizontally and/or vertically displaceable in the assembly plane perpendicularly in relation to the installation direction, such that the support element (16) in relation to the socket body (2) for alignment is horizontally adjustable and vertically displaceable in an assembly plane.

2. Cavity-wall socket according to Claim 1, **characterized in that** the support element (16) forms an interface for a latching connection.

3. Cavity-wall socket according to Claim 1 or 2, **characterized in that** the interface of the support element (16) is formed by an inner receptacle opening (18) having peripheral retaining contours (20).

4. Cavity-wall socket according to Claim 3, **characterized in that** the receptacle opening (18) of the support element (16) in relation to the retaining contours (20) is configured so as to be square, having in each case two sides which are mutually opposite in pairs so as to be mutually parallel and preferably having rounded transitions between the respective adjacent and mutually perpendicular sides, such that the retaining contours (20) provide two different latching assembly positions which in particular are rotated by 90° in the assembly plane.

5. Cavity-wall socket according to one of Claims 1 to 4,
**characterized in that** the support element (16) in the region of each assembly screw (14) has a retaining web (22) which is spaced apart in a parallel manner and engages in the socket body (2), wherein the support element (16) and each retaining web (22) have mutually aligned conduit openings (24, 26) for the respective assembly screw (14) in such a manner that a screw head (14a) of the assembly screw (14) is disposed so as to be counter-sunk in the region between the support element (16) and the retaining web (22).

6. Cavity-wall socket according to one of Claims 1 to 5,
**characterized in that** the support element (16) is additionally connected to the socket body (2) in the fashion of a bayonet connection.

7. Cavity-wall socket according to Claim 6, **characterized in that** the support element (16) in two diametrically opposed regions has in each case one retaining web (28) which is spaced apart in a parallel manner and engages in the socket body (2), wherein the retaining webs (28), in a relative rotational position of the socket body (2) are insertable into the latter and after relative twisting into an assembly position in each case engage behind one retaining appendage (30) within the socket body (2).

8. Cavity-wall socket according to one of Claims 5 to 7,
**characterized in that** each retaining web (22 and 28) via a transitional portion on the periphery of the inner receptacle opening (18) is connected to the support element (16) and extends away outwardly from the transitional portion and from the receptacle opening (18).

9. Cavity-wall socket according to Claim 8, **characterized in that** each transitional portion, in order to form the retaining contours (20) for the latching elements (9a) of the apparatus insert (9), has at least one retaining edge (34) which is formed by a clearance (32).

10. Cavity-wall socket according to one of Claims 1 to 9,
**characterized in that** the support element (16) is configured as a multiple frame having at least two identically configured receptacle openings (18) for a connection to at least two socket bodies (2).

11. Cavity-wall socket according to one of Claims 1 to 10,
**characterized in that** the support element (16) as an integral moulded part is composed of plastics or metal.

12. Cavity-wall socket according to one of Claims 5 to 11,
**characterized in that** the conduit openings (24, 26) in the bearing periphery (6) of the support element (16) and in the retaining web (22) are configured as slot holes.

13. Electrical installation system, comprising a cavity-wall socket having the features of one of Claims 1 to 12, and having a number of apparatus inserts (9), which via a latching connection are connected to the support element (16), which corresponds to that of the receptacle openings (18) of the support element (16).

14. Electrical installation system according to Claim 13,
**characterized in that** the apparatus insert (9), so as to adapt to the receptacle opening (18), in two diametrically opposed lateral regions or in at least two diametrically opposed corner regions has latching elements (108) to engage in a latching manner from the rear with opening peripheries (104a, 104b) of the receptacle opening (18).

15. Electrical installation system according to Claim 13,
**characterized in that** the apparatus insert (9), so as to adapt to the receptacle opening (18), is configured in such a manner that the former in at least two different orientations, which are rotated in particular by 90° in the opening plane, is insertable in a latching manner into the receptacle opening (18), and in the respective inserted assembly position is secured against twisting in the receptacle opening (18), in particular while allowing for slight lateral play.

16. Electrical installation system according to Claim 13,
**characterized in that** the apparatus insert (9), so as to adapt to the receptacle opening (18) which in two instances has two opening peripheries (104a) which are mutually opposite in pairs so as to be mutually parallel, are lineal, and collectively form a rectangular, in particular a square opening contour, in lateral regions lying between the mutually opposite latching elements (108) has bearing portions (110) for bearing on the respective straight opening peripheries (104a) of the receptacle opening (18).

17. Electrical installation system according to one of Claims 14 to 16,
**characterized in that** each latching element (108) of the apparatus insert (9) is configured as a resilient latching arm which extends in the insertion direction and, for engaging behind the respective opening periphery (104a, 104b) of the receptacle opening (18), on the end side has at least one latching appendage (112) which laterally protrudes in an outward manner.

18. Electrical installation system according to Claim 16,
**characterized in that** each latching element (108) is subdivided by a centric clearance (14) into two latching-arm portions which in each case have one latching appendage (12), wherein the clearance (14) serves for receiving an externally introducible releasing tool (16) for releasing the latching effect.

19. Electrical installation system according to one of Claims 14 to 18,
**characterized in that** the apparatus insert (9) has bearing portions (124) for bearing on the support element (16) in the inserted assembly position, wherein the bearing portions (124) and the latching elements (108) are devised for a latching height (H; H1, H2) that is adapted to the thickness (D) of the opening peripheries (104a) of the receptacle opening (18) in such a manner that the apparatus insert (9) in the inserted assembly position is retained without play in the insertion direction.

20. Electrical installation system according to one of Claims 15 to 19,
**characterized in that** the latching appendages (112) of the latching elements (108) have outwardly protruding latching faces (126) which have a back-taper angle (β) which is preferably smaller than 90° and in particular is in the range of 75° to 85°.

## Revendications

1. Boîte pour cloison creuse (1) pour l'installation électrique, comprenant un corps de boîte (2) en forme de pot possédant une ouverture (4) unilatérale, destiné à être introduit dans un trou découpé dans une cloison de montage (8) et à accueillir un insert d'appareillage (9), ainsi qu'un bord d'appui (6) entourant l'ouverture (4) du corps de boîte (2) à la manière d'une bride et destiné à s'appuyer sur la cloison de montage (8), et comprenant une fixation à griffes munie d'éléments de maintien (10) de type griffes, guidés sur le côté extérieur du corps de boîte (2) et pouvant être actionnés au moyen d'une vis de montage (14) respective, le corps de boîte (2) possédant sur son pourtour extérieur des guides (12) en forme de puits destinés à être traversés par les vis de montage (14) et à guider les éléments de maintien (10), le corps de boîte (2) et le bord d'appui (6) étant réalisés sous la forme de pièces individuelles séparées, le bord d'appui (6) étant constitué d'un élément porteur (16) plat en forme de cadre à la manière d'un anneau porteur courant sur les appareillages d'installation électrique et l'élément porteur (16) et le corps de boîte (2) pouvant être montés en commun avec les vis de montage (14) de la fixation à griffes,
**caractérisée en ce que**
le corps de boîte (2) possède respectivement, sur son fond dans la zone des guides (12) en forme de puits, une languette de maintien (41) façonnée qui recouvre partiellement le guide en forme de puits (12), les languettes de maintien (41) possédant respectivement dans la zone du guide (12) en forme de puits correspondant un trou de passage (43) destiné à loger la vis de montage (14), les guides (12) en forme de puits et/ou les trous de passage (43) dans les languettes de maintien (41) étant configurés de telle sorte que les vis de montage (14) sont logées de manière à pouvoir coulisser perpendiculairement au sens du montage dans le plan de montage horizontalement et/ou verticalement, de sorte que l'élément porteur (16) peut coulisser horizontalement et verticalement par rapport au corps de boîte (2) dans un plan de montage en vue de son orientation.

2. Boîte pour cloison creuse selon la revendication 1,
**caractérisée en ce que** l'élément porteur (16) forme une jonction pour une liaison par enclenchement.

3. Boîte pour cloison creuse selon la revendication 1 ou 2,
**caractérisée en ce que** la jonction de l'élément porteur (16) est formée par une ouverture d'accueil intérieure (18) munie de contours de maintien (20) en bordure.

4. Boîte pour cloison creuse selon la revendication 3,
**caractérisée en ce que** l'ouverture d'accueil (18) de l'élément porteur (16) est configurée relativement aux contours de maintien (20) sous forme carrée avec respectivement deux côtés opposés parallèles par paire et de préférence avec des transitions arrondies entre les côtés respectivement voisins perpendiculaires l'un à l'autre, de sorte que les contours de maintien (20) mettent à disposition deux positions de montage par enclenchement différentes, notamment pivotées de 90° dans le plan de montage.

5. Boîte pour cloison creuse selon l'une des revendications 1 à 4,
**caractérisée en ce que** l'élément porteur (16) possède, dans la zone de chaque vis de montage (14), un élément jointif de maintien (22) venant en prise dans le corps de boîte (2) et espacé parallèlement de celui-ci, l'élément porteur (16) et chaque élément jointif de maintien (22) possédant des ouvertures traversantes (24, 26) alignées pour la vis de montage (14) correspondante, de telle sorte qu'une tête de vis (14a) de la vis de montage (14) est disposée noyée dans la zone entre l'élément porteur (16) et l'élément jointif de maintien (22).

6. Boîte pour cloison creuse selon l'une des revendications 1 à 5,
**caractérisée en ce que** l'élément porteur (16) est relié au corps de boîte (2) en plus à la manière d'une liaison par baïonnette.

7. Boîte pour cloison creuse selon la revendication 6,
**caractérisée en ce que** l'élément porteur (16) possède, dans deux zones diamétralement opposées, à chaque fois un élément jointif de maintien (28) venant en prise dans le corps de boîte (2) et espacé parallèlement de celui-ci, les éléments jointifs de maintien (28) pouvant être introduits dans le corps de boîte (2) dans une position de rotation relative de celui-ci et, après une rotation relative dans une position de montage, venant en prise par l'arrière respectivement avec un épaulement de maintien (30) à l'intérieur du corps de boîte (2).

8. Boîte pour cloison creuse selon l'une des revendications 5 à 7,
**caractérisée en ce que** chaque élément jointif de maintien (22 et 28) est relié par le biais d'une portion de transition au bord de l'ouverture d'accueil intérieure (18) avec l'élément porteur (16) et s'étend vers l'extérieur en s'éloignant de la portion de transition et de l'ouverture d'accueil (18).

9. Boîte pour cloison creuse selon la revendication 8,
**caractérisée en ce que** chaque portion de transition possède au moins une arête de maintien (34) formée par un creux (32) et destinée à former les contours de maintien (20) pour les éléments d'enclenchement (9a) de l'insert d'appareillage (9).

10. Boîte pour cloison creuse selon l'une des revendications 1 à 9,
**caractérisée en ce que** l'élément porteur (16) est réalisé sous la forme d'un cadre multiple comprenant au moins deux ouvertures d'accueil (18) de configuration identique pour une liaison avec au moins deux corps de boîte (2).

11. Boîte pour cloison creuse selon l'une des revendications 1 à 10,
**caractérisée en ce que** l'élément porteur (16) se compose d'une pièce préformée monobloc en matière plastique ou en métal.

12. Boîte pour cloison creuse selon l'une des revendications 5 à 11,
**caractérisée en ce que** les ouvertures traversantes (24, 26) dans le bord d'appui (6) de l'élément porteur (16) et l'élément jointif de maintien (22) sont réalisées sous la forme de trous oblongs.

13. Système d'installation électrique, comprenant une boîte pour cloison creuse comprenant les caractéristiques selon l'une des revendications 1 à 12 et un nombre d'inserts d'appareillage (9) reliés à l'élément porteur (16) par le biais d'une liaison par enclenchement correspondant aux d'ouvertures d'accueil (18) de l'élément porteur (16).

14. Système d'installation électrique selon la revendication 13,
**caractérisé en ce que** l'insert d'appareillage (9), en adaptation à l'ouverture d'accueil (18), possède dans deux zones latérales diamétralement opposées ou dans au moins deux zones de coin diamétralement opposées des éléments d'enclenchement (108) destinés à venir en prise par l'arrière par enclenchement avec des bords d'ouverture (104a, 104b) de l'ouverture d'accueil (18).

15. Système d'installation électrique selon la revendication 13,
**caractérisé en ce que** l'insert d'appareillage (9), en adaptation à l'ouverture d'accueil (18), est configuré de telle sorte qu'il peut être inséré avec enclenchement dans l'ouverture d'accueil (18) dans au moins deux orientations différentes, notamment tournées de 90° dans le plan de l'ouverture, et qu'il est bloqué contre une rotation dans l'ouverture d'accueil (18) en position de montage respective introduite, notamment avec un faible jeu latéral.

16. Système d'installation électrique selon la revendication 13,
**caractérisé en ce que** l'insert d'appareillage (9), en adaptation à l'ouverture d'accueil (18), laquelle possède deux fois deux bords d'ouverture (104a) opposés parallèles par paire, rectilignes et formant ensemble un contour d'ouverture parallélépipédique, notamment carré, possède dans les zones latérales se trouvant entre les éléments d'enclenchement (108) opposés des portions d'appui (110) destinées à venir en appui contre les bords d'ouverture (104a) rectilignes respectifs de l'ouverture d'accueil (18).

17. Système d'installation électrique selon l'une des revendications 14 à 16,
**caractérisé en ce que** chaque élément d'enclenchement (108) de l'insert d'appareillage (9) est réalisé sous la forme d'un bras d'enclenchement élastique à ressort qui s'étend dans le sens de l'insertion et possède du côté de l'extrémité au moins un épaulement d'enclenchement (112) faisant saillie latéralement vers l'extérieur destiné à venir en prise par l'arrière avec le bord d'ouverture (104a, 104b) correspondant de l'ouverture d'accueil (18).

18. Système d'installation électrique selon la revendication 16,
**caractérisé en ce que** chaque élément d'enclenchement (108) est divisé par un creux central (14) en deux portions de bras d'enclenchement possédant respectivement un épaulement d'enclenchement (12), le creux (14) servant à accueillir un outil de libération (16) à introduire depuis l'extérieur pour libérer l'enclenchement.

19. Système d'installation électrique selon l'une des revendications 14 à 18,
**caractérisé en ce que** l'insert d'appareillage (9) possède des portions d'appui (124) destinées à venir en appui sur l'élément porteur (16) dans la position de montage introduite, les portions d'appui (124) et les éléments d'enclenchement (108) étant conçus pour une hauteur d'enclenchement (H ; H1, H2) adaptée à l'épaisseur (D) des bords d'ouverture (104a) de l'ouverture d'accueil (18) de telle sorte que l'insert d'appareillage (9) est maintenu sans jeu dans le sens de l'introduction dans la position de montage introduite.

20. Système d'installation électrique selon l'une des revendications 15 à 19,
**caractérisé en ce que** les épaulements d'enclenchement (112) des éléments d'enclenchement (108) possèdent des surfaces d'enclenchement (126) faisant saillie vers l'extérieur avec un angle de contre-dépouille (ß) qui est de préférence inférieur à 90° et qui est notamment compris dans la plage de 75° à 85°.
